# EUROPEAN PATENT SPECIFICATION

(11) **EP 4 142 029 B1**
(45) Date of publication and mention of the grant of the patent: **21.05.2025**
(21) Application number: 21854315.5
(22) Date of filing: 02.08.2021
(51) Int. Cl.: H01M 50/20

(54) **BATTERY MODULE HAVING STRUCTURE CAPABLE OF ABSORBING CELL SWELLING, AND BATTERY PACK AND VEHICLE COMPRISING SAME**
BATTERIEMODUL MIT STRUKTUR ZUR ABSORPTION VON ZELLQUELLUNG SOWIE BATTERIEPACK UND FAHRZEUG DAMIT
MODULE DE BATTERIE AYANT UNE STRUCTURE CAPABLE D'ABSORBER LE GONFLEMENT D'ÉLÉMENT, ET BLOC-BATTERIE ET VÉHICULE LE COMPRENANT

(30) Priority: 05.08.2020 KR 20200098099
(43) Date of publication of application: 01.03.2023
(73) Proprietor: LG Energy Solution, Ltd., Seoul 07335 (KR)
(72) Inventor: PARK, Jun-Hee, Daejeon 34122 (KR); RO, Yong-Hwan, Daejeon 34122 (KR)
(74) Representative: Plasseraud IP
(86) International application number: PCT/KR2021/010086
(87) International publication number: WO 2022/030922

(56) References cited:
- EP-A1- 3 565 023
- WO-A1-2020/004039
- CN-U- 202 259 460
- CN-U- 207 818 693
- CN-U- 209 766 556
- CN-U- 211 045 543
- KR-A- 20060 063 174
- KR-A- 20180 003 562

## Description

### TECHNICAL FIELD

The present disclosure relates to a battery module having a structure capable of absorbing cell swelling, and a battery pack and a vehicle including the battery module, and more particularly, to a battery module having a structure in which a partition wall assembly is provided between unit stacks each including a plurality of battery cells to secure a space for accommodating the volume of a unit stack increased due to swelling of a battery cell, and a battery pack and a vehicle including the battery module.

### BACKGROUND ART

In order to sufficiently secure the capacity of a secondary battery, the number of battery cells located in a battery module should increase, and as the number of battery cells increases, a volume increment due to swelling also increases. As the volume increment increases, a force applied to a side wall of a module housing due to the swelling also increases. In order for the module housing to withstand the force without being deformed, a thickness of a plate of the module housing should be increased.

In order to absorb expansion caused by the battery cell swelling without excessively increasing the thickness of the module housing, in the prior art, a swelling absorbing pad having a certain thickness may be applied between adjacent battery cells and/or to both outmost edge portions of a battery cell stack. However, when the swelling absorbing pad is applied, because there is no separate fixing structure for holding the swelling absorbing pad, a process of accommodating a stack including the absorbing pad and the battery cells in the module housing is not easy.

That is, in order to prevent the battery cells and the absorbing pad from moving in the module housing, the battery cells and the swelling absorbing pad should be stacked to have a thickness greater than a width of the module housing, and then both sides of the stack should be pressed so that the pressed stack is accommodated in the module housing.

However, when the number of battery cells increases in order to secure the capacity of the secondary battery, the thickness of the stack including the battery cells and the swelling absorbing pad may inevitably increase, and thus the process of accommodating the stack in the module housing may not be easy and the battery cells may be interfered with the module housing and may be damaged during the accommodating process.

Accordingly, there is a demand for the development of a battery module structure capable of effectively absorbing volume expansion due to swelling of a battery cell and facilitating a process of inserting a battery cell stack into a module housing.

An example of a secondary battery module and a wall of the secondary battery module is described in KR 2006/0063174 A. An example of a battery crush protection system is described in KR 2018/0003562 A. An example of a horizontal battery container is described in CN 202259460 U.

### DISCLOSURE

### Technical Problem

The present disclosure is designed to solve the problems of the related art, and therefore the present disclosure is directed to providing a battery module having a structure capable of effectively absorbing volume expansion due to swelling of a battery cell and facilitating a process of inserting a battery cell stack into a module housing.

Also, the present disclosure is directed to providing a battery module having a structure capable of easily handling the battery module in consideration of an increase in the weight of the battery module as the size and the number of battery cells applied to one battery module increases to secure capacity.

However, technical problems to be solved by the present disclosure are not limited to the above-described technical problems and one of ordinary skill in the art will understand other technical problems from the following description.

### Technical Solution

The present disclosure provides a battery module as defined by the independent claim 1, a battery pack as defined by the claim 11, and a vehicle as defined by the claim 12. Preferred embodiments are defined in the appended dependent claims.

The battery module is defined according to claim 1.

The plurality of insertion slits may be formed at positions corresponding to the pair of partition walls.

The pair of partition walls may be inserted into a pair of insertion slits that are spaced apart from each other.

The pair of connectors may be spaced apart from each other by a distance corresponding to a height of the module housing.

Each of the pair of partition walls may include at least one handling hole formed in a portion exposed to the outside of the module housing through the insertion slit.

Each of the pair of partition walls may have the length corresponding to an electrode assembly receiver of the battery cell.

Each of the module housing and the partition wall assembly may be formed of a metal material.

The module housing may include: a lower housing including a base plate and a pair of side plates; and an upper housing coupled from the top of the cell stack to the lower housing.

The base plate and the pair of side plates constituting the lower housing may be integrally formed with each other, and a welding portion may be formed between the upper housing and the lower housing.

The welding portion may be formed between an inner surface of the insertion slit and the partition wall.

There are also provided the battery pack (claim 11) and the vehicle (claim 12) including the battery module.

### Advantageous Effects

According to an aspect of the present disclosure, volume expansion due to swelling of a battery cell may be effectively absorbed, and a process of inserting a battery cell stack into a module housing may be facilitated.

Also, according to another aspect of the present disclosure, despite an increase in the weight of a battery module as the size and the number of battery cells applied to one battery module increases to secure capacity, the battery module may be easily handled.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings.
FIG. 1 is an exploded perspective view illustrating a battery module according to an embodiment of the present disclosure.
FIG. 2 is a view illustrating a cell stack of the present disclosure.
FIG. 3 is a view illustrating a lower housing of a module housing of the present disclosure.
FIG. 4 is a view illustrating a bottom surface of the lower housing of FIG. 3.
FIGS. 5 through 7 are views illustrating a partition wall assembly of the present disclosure.
FIG. 8 is a view illustrating a state where the lower housing and the partition wall assembly of the present disclosure are coupled to each other.
FIG. 9 is a view illustrating that unit stacks are inserted into a space between a side plate of the lower housing and the partition wall assembly and a space between a pair of adjacent partition wall assemblies of FIG. 8.
FIG. 10 is an assembled perspective view illustrated the battery module according to an embodiment of the present disclosure.
FIG. 11 is a view illustrating a partition wall assembly applied to a battery module according to another embodiment of the present disclosure.
FIG. 12 is a view illustrating a top surface of the battery module according to another embodiment of the present disclosure.

### DETAILED DESCRIPTION

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

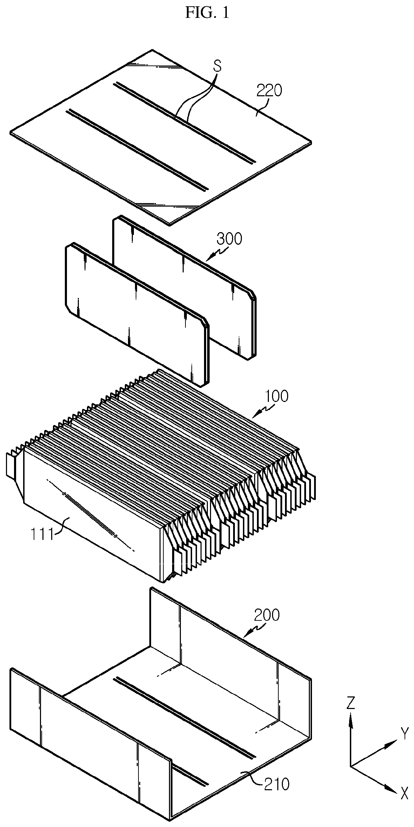

Referring to FIG. 1, a battery module according to an embodiment of the present disclosure includes a cell stack 100, a module housing 200, and a partition wall assembly 300.

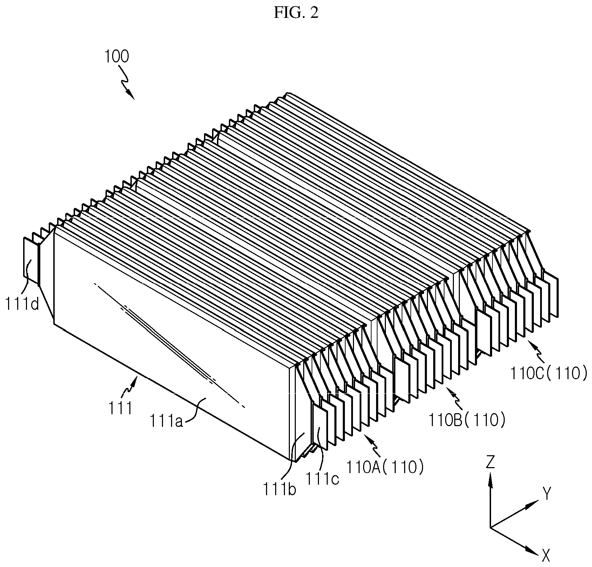

Referring to FIGS. 1 and 2, the cell stack 100 includes a plurality of unit stacks 110. The partition wall assembly 300 is located between adjacent unit stacks 110. The unit stack 110 includes a plurality of battery cells 111 that are stacked to face each other.

For example, a pouch-type battery cell may be used as the battery cell 111. In this case, the battery cell 111 includes an electrode assembly receiver 111a, a sealing portion 111b formed around the electrode assembly receiver 111a, and a pair of electrode leads 111c connected to an electrode assembly (not shown) and drawn out to the outside of a pouch case through the sealing portion 111b. The pair of electrode leads 111c may be drawn out in opposite directions. The pair of electrode leads 111c may be exposed through front and rear opening portions of the module housing 200. The front and rear opening portions may be respectively formed on both sides in a longitudinal direction (direction parallel to an X-axis) of the module housing 200.

The plurality of battery cells 111 are erected and stacked facing each other on a bottom surface (surface parallel to an X-Y plane) of the module housing 200, to form the unit stack 110. Although only three unit stacks 110 each including the plurality of battery cells 111 are illustrated in the present disclosure, this is merely an example and the number of unit stacks 110 may be two, or four or more.

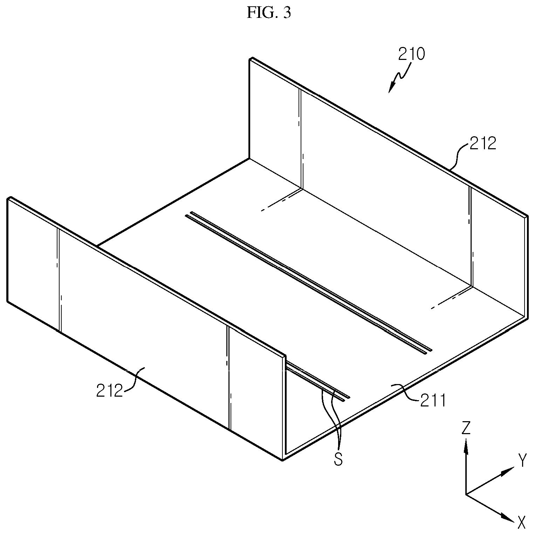

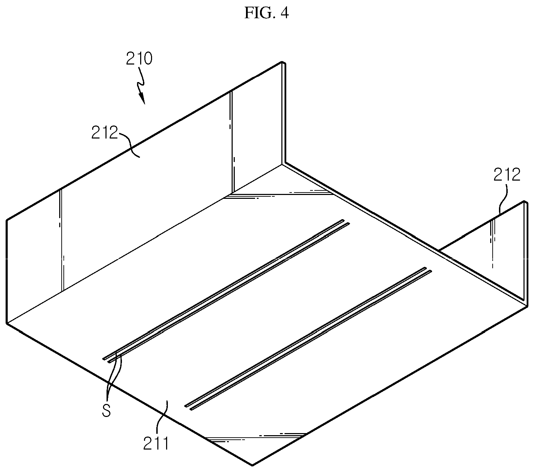

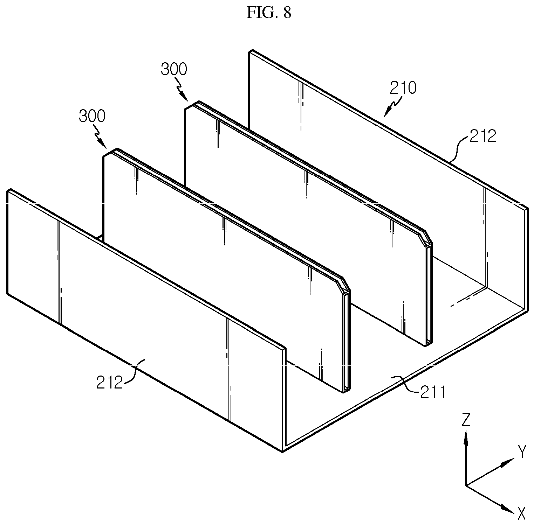

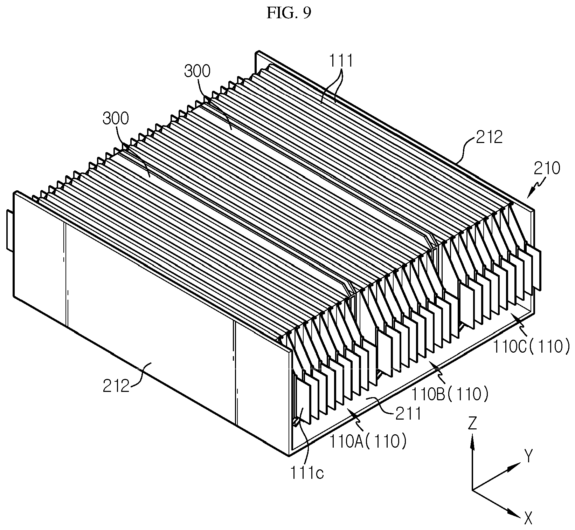

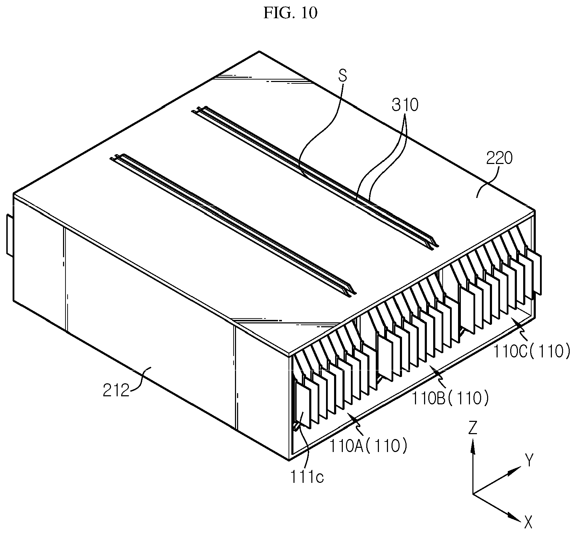

Referring to FIGS. 1 through 4 and FIGS. 8 through 10, the module housing 200 accommodates the cell stack 100 therein, and includes a plurality of insertion slits S formed in a top surface and a bottom surface of the module housing 200. The module housing 200 may have open front and rear surfaces (surfaces parallel to a Y-Z plane). The module housing 200 may be formed of a metal material in consideration of rapid heat dissipation and rigidity.

The module housing 200 includes a lower housing 210 and an upper housing 220. The lower housing 210 includes a base plate 211 supporting the cell stack 100, and a pair of side plates 212 extending upward from both end portions in a width direction (direction parallel to a Y-axis) of the base plate 211. The base plate 211 and the side plates 212 may be integrally formed with each other.

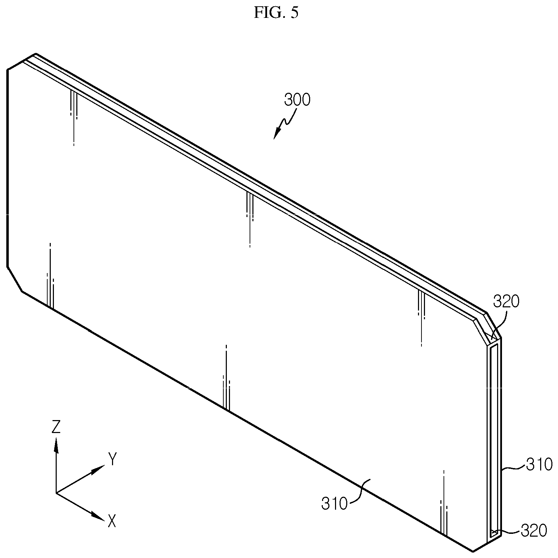

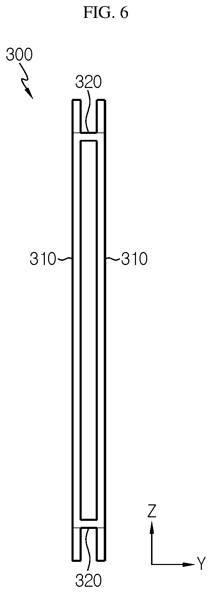

The base plate 211 includes a plurality of insertion slits S longitudinally extending in a longitudinal direction (direction parallel to the X-axis) of the base plate 211. The number of the insertion slits S corresponds to the number of partition walls 310 (see FIGS. 5 and 6) constituting the partition wall assembly 300 described below. The insertion slit S formed in the base plate 211 provides a space into which a lower end of the partition wall assembly 300 may be inserted and fixed. The side plates 212 face outermost battery cells 111 of the cell stack 100. When the partition wall assembly 300 is inserted and fixed through the insertion slit S formed in the base plate 211, a space into which each unit stack 110 may be inserted is formed between the side plate 212 and the partition wall assembly 300 and between a pair of adjacent partition wall assemblies 300.

The upper housing 220 is coupled to the lower housing 210 from the top of the cell stack 100 in a state where the cell stack 100 is seated on the lower housing 210. Both end portions in a width direction (direction parallel to the Y-axis) of the upper housing 220 are respectively coupled to the pair of side plates 212. For convenience of a process and prevention of damage to the cell stack 100, it is preferable that a process of coupling the upper housing 220 to the lower housing 210 is performed after a plurality of unit stacks 110A, 110B, 110C are respectively seated in a plurality of spaces formed by coupling between the lower housing 210 and the partition wall assembly 300.

A welding portion is formed between the partition wall assembly 300 and an inner surface of the insertion slit S. That is, the partition wall assembly 300 and the lower housing 210 are coupled to each other by using welding. A welding portion may also be formed between the lower housing 210 and the upper housing 220. That is, the lower housing 210 and the upper housing 220 may be coupled to each other by using welding. However, a coupling method between the lower housing 210 and the upper housing 220 is not limited thereto, and the lower housing 210 and the upper housing 220 may be coupled to each other by using a method such as bolting instead of welding.

The upper housing 220 includes a plurality of insertion slits S respectively formed at positions facing the insertion slits S formed in the lower housing 210. Accordingly, when the upper housing 220 is coupled to the lower housing 210, an upper end of the partition wall assembly 300 already fixed to the lower housing 210 is exposed beyond the top of the module housing 200 through the insertion slit S formed in the upper housing 220. To increase a fastening force between the module housing 200 and the partition wall assembly 300, a welding portion may be formed between the partition wall assembly 300 and an inner surface of the insertion slit S formed in the upper housing 220. That is, the inner surface of the insertion slit S formed in the upper housing 220 and the partition wall assembly 300 may be coupled to each other by using welding.

Referring to FIGS. 5 through 10, the partition wall assembly 300 includes a pair of partition walls 310 and a pair of connectors 320 for connecting the pair of partition walls 310. The partition wall assembly 300 may be formed of a metal material, like the module housing 200.

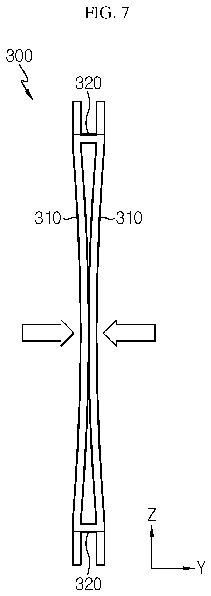

The pair of partition walls 310 are spaced apart from each other to face each other. The pair of partition walls 310 are each in close contact with the electrode assembly receiver 111a, and are elastically deformed so that central portions thereof are closer to each other by pressure applied due to swelling of the battery cell 111 (see FIG. 7). That is, the partition wall assembly 300 functions to absorb the swelling of the battery cell 111. The partition wall 310 has a length and a width corresponding to the insertion slit S, and an upper end and a lower end of the partition wall 310 pass through the insertion slits S to be exposed to the outside of the module housing 200.

The partition wall 310 has a length corresponding to the electrode assembly receiver 111a of the outermost battery cell 111 of the unit stack 110. This is to enable the partition wall assembly 300 to effectively function as a cooling fin and function as an absorbing member for absorbing swelling, and to prevent a short-circuit by securing a certain distance or more between the electrode lead 111c and the partition wall assembly 300.

One of the pair of connectors 320 is formed at a position downwardly spaced apart by a certain distance from the upper end of the partition wall 310. The remaining one of the pair of connectors 320 is formed at a position upwardly spaced apart by a certain distance from the lower end of the partition wall 310. The connector 320 may function as a stopper for preventing the partition wall assembly 300 from being separated upward or downward from the module housing 200 through the insertion slit S. That is, the connector 320 is located inside the module housing 200. The pair of connectors 320 are spaced apart from each other by a distance corresponding to a height of the module housing 200, that is, a distance between the base plate 211 and the upper housing 220.

As described above, because the battery module according to an embodiment of the present disclosure includes the partition wall assembly 300 in the module housing 200, swelling of the battery cell 111 of the cell stack 100 may be absorbed.

Also, according to a battery module structure according to an embodiment of the present disclosure, the unit stacks 110A, 110B, 110C may be individually seated in a plurality of spaces formed when the partition wall assembly 300 is fixedly installed on the lower housing 210, and then the upper housing 220 may be fastened. Accordingly, when the number of the battery cells 111 constituting the cell stack 100 is very large, a process of seating the cell stack 100 may be easily performed, and thus damage to the cell stack 100 in a manufacturing process of the battery module may be prevented.

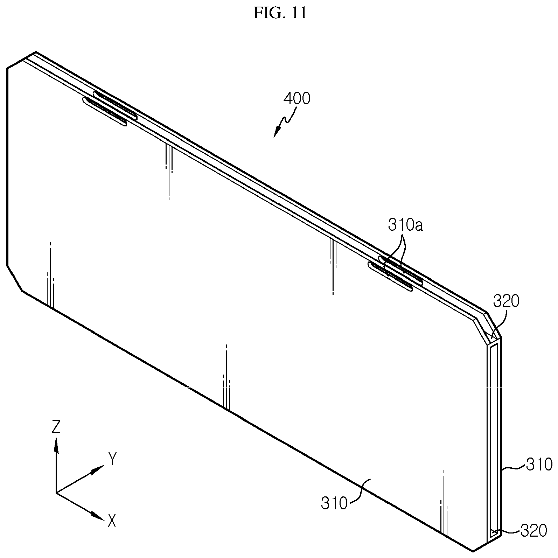

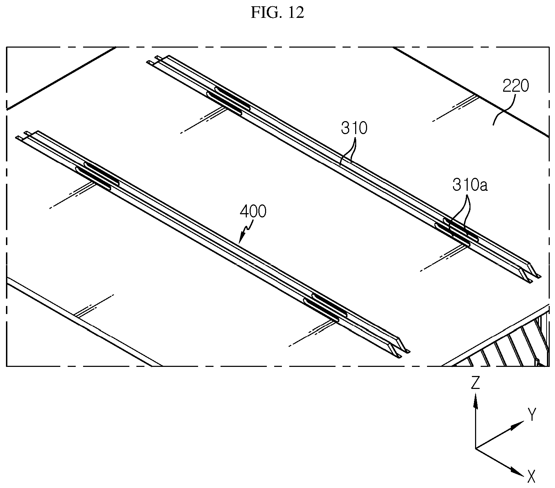

A battery module according to another embodiment of the present disclosure will now be described with reference to FIGS. 11 and 12. When compared to the battery module according to an embodiment of the present disclosure described above, the battery module according to another embodiment of the present disclosure has a difference in a structure of a partition wall assembly 400, but the remaining elements are substantially the same. Accordingly, in describing the battery module according to another embodiment of the present disclosure, the same description as that made in the above embodiment will be omitted and the following will focus on a difference.

The partition wall assembly 400 includes at least one handling hole 310a formed in a portion exposed to the outside of the module housing 200 through the insertion slit S formed in a top surface of the module housing 200, that is, in the upper housing 220. The handling hole 310a may be formed in each of the pair of partition walls 310 constituting the partition wall assembly 400, or may be formed in only one of the pair of partition walls 310. The handling hole 310a may help an operator to easily handle the battery module.

To secure sufficient capacity, when the size and the number of the battery cells 111 constituting the battery module increase, the weight of the battery module inevitably increases. Accordingly, in order for the operator to easily handle the battery module, a gripping means formed on an outer surface of the battery module is required. The battery module according to another embodiment of the present disclosure may fulfill the requirement by providing the handling hole 310a formed by using the partition wall assembly 300 exposed to the outside of the module housing 200.

The present disclosure has been described in detail. However, it should be understood that the detailed description and specific examples, while indicating preferred embodiments of the present disclosure, are given by way of illustration only, since various changes and modifications within the scope of the present disclosure defined by the appended claims will become apparent to one of ordinary skill in the art from this detailed description.

## Claims

1. A battery module comprising:
a cell stack (100) comprising a plurality of unit stacks (110) each comprising a plurality of battery cells (111);
a module housing (200) accommodating the cell stack (100) therein and comprising a plurality of insertion slits (S) respectively formed in a top surface and a bottom surface; and
at least one partition wall assembly (300) located parallel to each of the plurality of battery cells (111), and located between adjacent unit stacks (110) and deformed due to volume expansion due to swelling of the plurality battery cells (111) to absorb the swelling, wherein the at least one partition wall assembly (300) comprises:
a pair of partition walls (310) spaced apart from each other to face each other; and
a pair of connectors (320) respectively formed at a position downwardly spaced apart by a certain distance from upper ends of the pair of partition walls (310) and at a position upwardly spaced apart by a certain distance from lower ends of the pair of partition walls (310), and configured to connect the pair of partition walls (310);
wherein the upper ends and the lower ends of the pair of partition walls (310) are configured to be inserted and fixed through the plurality of insertion slits (S), such that the upper and lower ends of the pair of partition walls (310) are configured to pass through the plurality of insertion slits (S) to be exposed to the outside of the module housing (200);
wherein each of the pair of partition walls (310) has a length and a width corresponding to the respective insertion slit (S), and wherein the number of insertion slits (S) corresponds to the number of the partition walls (310).

2. The battery module of claim 1, wherein
the plurality of insertion slits (S) are formed at positions corresponding to the pair of partition walls (310).

3. The battery module of claim 2, wherein
the pair of partition walls (310) are inserted into a pair of insertion slits (S) that are spaced apart from each other.

4. The battery module of claim 3, wherein
the pair of connectors (320) are spaced apart from each other by a distance corresponding to a height of the module housing (200).

5. The battery module of claim 1, wherein
each of the pair of partition walls (310) comprises at least one handling hole (310a) formed in a portion exposed to the outside of the module housing (200) through the insertion slit (S).

6. The battery module of claim 1, wherein
each of the pair of partition walls (310) has the length corresponding to an electrode assembly receiver (111a) of the battery cell (111).

7. The battery module of claim 1, wherein
each of the module housing (200) and the partition wall assembly (300) is formed of a metal material.

8. The battery module of claim 1, wherein
the module housing (200) comprises:
a lower housing (210) comprising a base plate (211) and a pair of side plates (212); and
an upper housing (220) coupled from the top of the cell stack (100) to the lower housing (210).

9. The battery module of claim 8, wherein
the base plate (211) and the pair of side plates (212) constituting the lower housing (210) are integrally formed with each other, and
a welding portion is formed between the upper housing (220) and the lower housing (210).

10. The battery module of claim 9, wherein
the welding portion is formed between an inner surface of the insertion slit (S) and the partition wall (310).

11. A battery pack comprising the battery module according to any one of claims 1 to 10.

12. A vehicle comprising the battery module according to any one of claims 1 to 10.

## Patentansprüche

1. Batteriemodul, umfassend:
einen Zellenstapel (100), welcher eine Mehrzahl von Einheitsstapeln (110) umfasst, welche jeweils eine Mehrzahl von Batteriezellen (111) umfassen;
ein Modulgehäuse (200), welches den Zellenstapel (100) darin aufnimmt und eine Mehrzahl von Einführschlitzen (S) umfasst, welche jeweils in einer oberen Fläche und einer unteren Fläche ausgebildet sind; und
wenigstens eine Trennwandanordnung (300), welcher sich parallel zu jeder aus der Mehrzahl von Batteriezellen (111) befindet und sich zwischen benachbarten Einheitsstapeln (110) befindet und aufgrund einer Volumenexpansion aufgrund eines Anschwellens der Mehrzahl von Batteriezellen (111) deformiert ist, um das Anschwellen zu absorbieren, wobei die wenigstens eine Trennwandanordnung (300) umfasst:
ein Paar von Trennwänden (310), welches voneinander beabstandet ist, um einander zugewandt zu sein; und
ein Paar von Verbindern (320), welche jeweils an einer Position, welche nach unten um einen bestimmten Abstand von oberen Enden des Paars von Trennwänden (310) beabstandet ist, und an einer Position ausgebildet sind, welche nach oben um einen bestimmten Abstand von unteren Enden des Paars von Trennwänden (310) beabstandet ist, und dazu eingerichtet sind, das Paar von Trennwänden (310) zu verbinden;
wobei die oberen Enden und die unteren Enden des Paars von Trennwänden (310) dazu eingerichtet sind, durch die Mehrzahl von Einführschlitzen (S) eingeführt und befestigt zu sein, sodass die oberen und unteren Enden des Paars von Trennwänden (310) dazu eingerichtet sind, durch die Mehrzahl von Einführschlitzen (S) zu verlaufen, um zu der Außenseite des Modulgehäuses (200) exponiert zu sein;
wobei jedes des Paars von Trennwänden (310) eine Länge und eine Breite aufweist, welche dem jeweiligen Einführschlitz (S) entspricht, und wobei die Anzahl von Einführschlitzen (S) der Anzahl der Trennwände (310) entspricht.

2. Batteriemodul nach Anspruch 1, wobei
die Mehrzahl von Einführschlitzen (S) an Positionen ausgebildet sind, welche dem Paar von Trennwänden (310) entsprechen.

3. Batteriemodul nach Anspruch 2, wobei
das Paar von Trennwänden (310) in ein Paar von Einführschlitzen (S) eingeführt ist, welche voneinander beabstandet sind.

4. Batteriemodul nach Anspruch 3, wobei
das Paar von Verbindern (320) voneinander um einen Abstand beabstandet ist, welcher einer Höhe des Modulgehäuses (200) entspricht.

5. Batteriemodul nach Anspruch 1, wobei
jede des Paars von Trennwänden (310) wenigstens ein Hantierungsloch (310a) umfasst, welches in einem Abschnitt ausgebildet ist, welcher zu der Außenseite des Modulgehäuses (200) durch den Einführschlitz (S) exponiert ist.

6. Batteriemodul nach Anspruch 1, wobei
jede des Paars von Trennwänden (310) eine Länge aufweist, welche einer Elektrodenanordnung-Aufnahme (111a) der Batteriezelle (111) entspricht.

7. Batteriemodul nach Anspruch 1, wobei
jede aus dem Modulgehäuse (200) und der Trennwandanordnung (300) aus einem metallischen Material ausgebildet ist.

8. Batteriemodul nach Anspruch 1, wobei
das Modulgehäuse (200) umfasst:
ein unteres Gehäuse (210), welches eine Grundplatte (211) und ein Paar von Seitenplatten (212) umfasst; und
ein oberes Gehäuse (220), welches von der Oberseite des Zellenstapels (100) zu dem unteren Gehäuse (210) gekoppelt ist.

9. Batteriemodul nach Anspruch 8, wobei
die Grundplatte (211) und das Paar von Seitenplatten (212), welche das untere Gehäuse (210) ausbilden, integral miteinander ausgebildet sind, und
ein Schweißabschnitt zwischen dem oberen Gehäuse (220) und dem unteren Gehäuse (210) ausgebildet ist.

10. Batteriemodul nach Anspruch 9, wobei
der Schweißabschnitt zwischen einer inneren Fläche des Einführschlitzes (S) und der Trennwand (310) ausgebildet ist.

11. Batteriepack, umfassend das Batteriemodul nach einem der Ansprüche 1 bis 10.

12. Fahrzeug, umfassend das Batteriemodul nach einem der Ansprüche 1 bis 10.

## Revendications

1. Module de batterie comprenant :
un empilement de cellules (100) comprenant une pluralité d'empilements unitaires (110) comprenant chacun une pluralité de cellules de batterie (111) ;
un boîtier de module (200) contenant l'empilement de cellules (100) dans celui-ci et comprenant une pluralité de fentes d'insertion (S) formées respectivement dans une surface de dessus et une surface de dessous ; et
au moins un ensemble de parois de séparation (300) situé parallèlement à chacune de la pluralité de cellules de batterie (111), et situé entre des empilements unitaires (110) adjacents et déformé en raison d'une expansion de volume due à un gonflement de la pluralité cellules de batterie (111) pour absorber le gonflement, dans lequel l'au moins un ensemble de parois de séparation (300) comprend :
une paire de parois de séparation (310) espacées l'une de l'autre pour se faire face ; et
une paire de liaisons (320) formées respectivement à une position espacée vers le bas sur une certaine distance par rapport à des extrémités supérieures de la paire de parois de séparation (310) et à une position espacée vers le haut sur une certaine distance par rapport à des extrémités inférieures de la paire de parois de séparation (310), et configurées pour relier la paire de parois de séparation (310) ;
dans lequel les extrémités supérieures et les extrémités inférieures de la paire de parois de séparation (310) sont configurées pour être insérées et fixées à travers la pluralité de fentes d'insertion (S), de sorte que les extrémités supérieures et inférieures de la paire de parois de séparation (310) soient configurées pour passer à travers la pluralité de fentes d'insertion (S) pour être exposées à l'extérieur du boîtier de module (200) ;
dans lequel chacune de la paire de parois de séparation (310) a une longueur et une largeur correspondant à la fente d'insertion (S) respective, et dans lequel le nombre de fentes d'insertion (S) correspond au nombre des parois de séparation (310).

2. Module de batterie selon la revendication 1, dans lequel
la pluralité de fentes d'insertion (S) sont formées à des positions correspondant à la paire de parois de séparation (310).

3. Module de batterie selon la revendication 2, dans lequel
la paire de parois de séparation (310) sont insérées dans une paire de fentes d'insertion (S) qui sont espacées l'une de l'autre.

4. Module de batterie selon la revendication 3, dans lequel
la paire de liaisons (320) sont espacées l'une de l'autre sur une distance correspondant à une hauteur du boîtier de module (200).

5. Module de batterie selon la revendication 1, dans lequel
chacune de la paire de parois de séparation (310) comprend au moins un trou de manipulation (310a) formé dans une partie exposée à l'extérieur du boîtier de module (200) à travers la fente d'insertion (S).

6. Module de batterie selon la revendication 1, dans lequel
chacune de la paire de parois de séparation (310) a la longueur correspondant à un récepteur d'ensemble d'électrodes (111a) de la cellule de batterie (111).

7. Module de batterie selon la revendication 1, dans lequel
chacun du boîtier de module (200) et de l'ensemble de parois de séparation (300) est constitué d'un matériau métallique.

8. Module de batterie selon la revendication 1, dans lequel
le boîtier de module (200) comprend :
un boîtier inférieur (210) comprenant une plaque de base (211) et une paire de plaques latérales (212) ; et
un logement supérieur (220) accouplé entre le dessus de l'empilement de cellules (100) et le logement inférieur (210).

9. Module de batterie selon la revendication 8, dans lequel
la plaque de base (211) et la paire de plaques latérales (212) constituant le logement inférieur (210) sont formées d'un seul bloc l'une avec l'autre, et
une partie de soudure est formée entre le boîtier supérieur (220) et le boîtier inférieur (210).

10. Module de batterie selon la revendication 9, dans lequel
la partie de soudure est formée entre une surface intérieure de la fente d'insertion (S) et la paroi de séparation (310).

11. Bloc-batterie comprenant le module de batterie selon l'une quelconque des revendications 1 à 10.

12. Véhicule comprenant le module de batterie selon l'une quelconque des revendications 1 à 10.
